Europäisches Patentamt

**European Patent Office** (11) Publication number: **0 064 331**

Office européen des brevets **A1**

(12) **EUROPEAN PATENT APPLICATION**

(21) Application number: **82301777.7** (51) Int. Cl.³: **G 01 F 3/22**
**G 01 F 15/00**

(22) Date of filing: **05.04.82**

(30) Priority: **02.05.81 GB 8113612**

(43) Date of publication of application:
**10.11.82 Bulletin 82/45**

(84) Designated Contracting States:
**AT BE DE FR GB IT NL SE**

(71) Applicant: **UNITED GAS INDUSTRIES PLC**
**216, Rowan Road Streatham Vale**
**London SW15 5HX(GB)**

(72) Inventor: **Ashford, Leslie Ernest Thomas**
**12, Ravenswood Avenue**
**West Wickham Kent(GB)**

(74) Representative: **Betteridge, Eileen Margaret**
**216, Rowan Road**
**Streatham Vale London, SW16 5HX(GB)**

(54) Gas meters.

㉗ A gas meter of the kind in which gas is directed in a specific direction through a gas measuring device will not record gas flow correctly if the gas flow is reversed. According to the invention a one-way valve (17) is fitted into the gas path, e.g. an exhaust tube (14), so that gas flow is shut off if the gas flow is reversed. The valve may be a pivoted flap valve or a ball valve.

FIG.1

EP 0 064 331 A1

- 1 -

Gas Meters.

This invention relates to gas meters of the kind in which the gas is directed in a specific direction through a gas measuring device, e.g. one in which a diaphragm is driven back-and-forth by the gas pressure.  Such gas meters have counting devices which will not record gas flow correctly if the gas flow is in the reverse direction, either not counting at all or counting in a negative sense.  One example of a gas meter of this kind is described in our co-pending E.P.O. Patent Application No. 80301847.2.

This invention provides a gas meter of the kind having a gas path or paths therethrough and a counting device which records gas flowing in one direction through said path or paths characterized by the inclusion of one-way valve means fitted into the path or paths so that gas is allowed to flow only in said one direction, the valve means shutting off gas flowing in the reverse direction.

Such valve means may comprise a pivoted flap valve or a ball member co-operating with a seat.

The said valve means may be incorporated in an exhaust tube connected to the outlet of the gas meter.  Alternatively it may be incorporated in the gas path adjacent valve gear of the meter.

Three specific embodiments of the invention are shown in the accompanying drawings, in which:-
Figure 1 is a diagrammatic section through a gas meter including a one-way valve,
Figure 2 is a detail of the valve of Figure 1,
Figure 3 is a diagrammatic section through another gas meter including a one-way valve,
Figure 4 is a detail of the valve of Figure 3,
Figure 5 is a plan view of the valve gear of a gas meter,   and
Figure 6 is a side section through the valve gear of Figure 5.

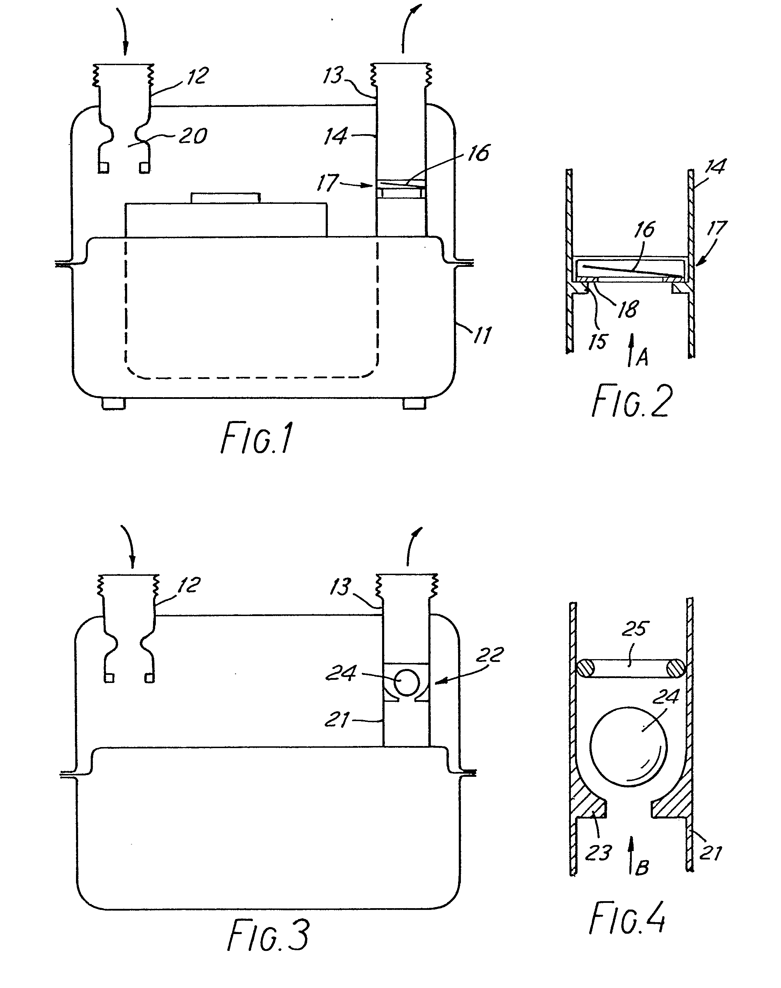

Referring first to Figures 1 and 2, a gas meter (11) is of the kind in which gas is admitted through an inlet (12), passes through a measuring system (not shown) and leaves through an outlet (13). The measuring system may comprise one or more diaphragms which are driven back-and-forth by the flowing gas, the consequent movement driving a counter which records the total volume of gas flowing. Should connections (12) and (13) be reversed then either the counter will not record at all or else it may work backwards so showing a continuous decrease in the total recorded.

This invention is concerned with preventing gas flowing in the reverse direction through the meter so that the faulty connections will be detected and corrected. The outlet (13) is connected to an exhaust tube (14) forming part of the gas path through the meter. The exhaust tube is a moulded plastic tube as seen best in Figure 2. Internally the tube is formed with a shoulder (15) which forms a location for a one-way valve (17). The valve is of the kind having a pivoted flap member (16), with a limited freedom to move away from its seat (18) to allow gas flow in the direction of arrow A. As can be seen from inspection of Figure 2, a gas flow in the direction A tends to lift the flap member (16) off its seat, while gas flow in an opposite direction pushes the flap member (16) onto its seat and cuts off the flow. Therefore if the meter were incorrectly connected with the outlet (13) and inlet (12) reversed, little or no gas would flow and it would be obvious that something was wrong.

The inlet (12) may have a tilt detecting device (20) connected to it, said device being described in more detail and claimed in our co-pending U.K. Patent Application No. 8101905.

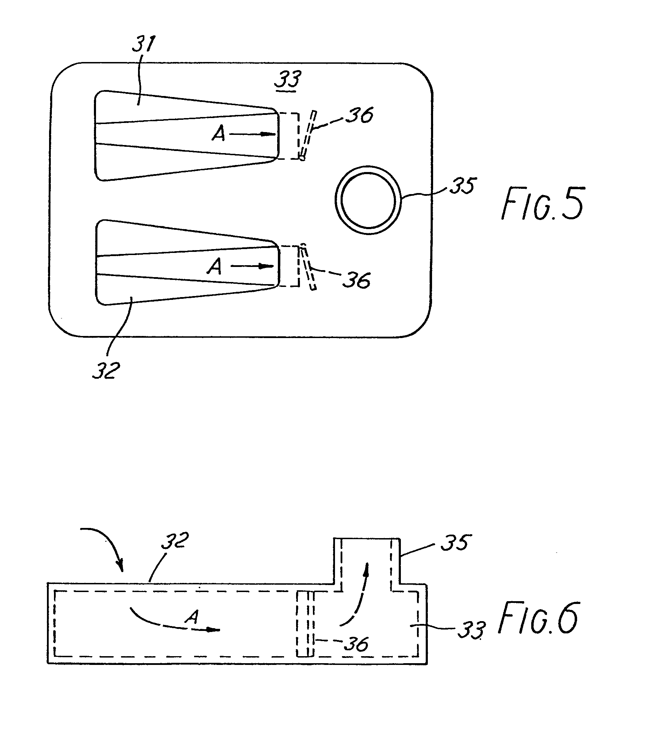

An alternative form of one-way valve is shown in Figures 3 and 4, which show a gas meter similar to that of Figures 1 and 2, with a similar inlet (12) and outlet (13). A plastic moulding (21) forms an exhaust tube connected to the outlet (13), and this exhaust tube carries the one-way valve (22). As seen best in Figure 4, the exhaust tube is formed with an internal shoulder (23) which has a part-spherical top surface forming the seat for a valve member (24). The valve member is a light, hollow plastic ball which, when the valve is closed, rests on the seat. When gas flows in the direction of arrow B the ball is lifted off the seat. The diameter of the ball is sufficiently smaller than the internal diameter of the exhaust tube to allow normal gas flow. A retaining circlip (25) limits the potential movement of the ball. When the inlet and outlet connections are reversed, gas begins to flow in the reverse direction. This pushes the ball (24) onto the seat (23) and shuts off the flow.

Although the one-way valves have been shown connected in the exhaust tubes, they could be connected to the inlet of the gas meter.

Referring now to Figures 5 and 6, a gas meter (30) is of the kind in which a pair of diaphragms (not shown) are driven back-and-forth in chambers (not shown). A valve chest (33) is located above the chambers, providing valve grids (31, 32). A pair of sliding valves (not shown) slide over grids (31, 32) so as to direct the gas flows in timed relationship between the chambers and an opening (34) connected to an exhaust tube (35). The outlet paths from the chambers extend across the valve chest in the direction of arrows A. Each such path has a one-way valve (36) connected therein adjacent the exhaust tube, the one-way valves being flap valves similar to valve (17) of Figures 1 and 2. The one-way valves operate in a similar manner to that described in relationship to Figures 1 and 2, closing when a flow in the reverse sense to that of arrows A occurs.

Claims:

1. A gas meter of the kind having a gas path or paths therethrough and a counting device which records gas flowing in one direction through said path or paths, characterized by the inclusion of one or more one-way valve means (17, 22, 36) fitted into the path or paths so that gas is allowed to flow only in said one direction, the valve means shutting off gas flowing in the reverse direction.

2. A gas meter as claimed in claim 1, further characterized by said one-way valve means comprising a flap valve (16) co-operating with a seat (18) and pivoted so that gas flowing in said one direction lifts it off its seat.

3. A gas meter as claimed in claim 2, further characterized by said one-way valve means (17) being fitted into a common exhaust tube (14) through which gas leaves the meter.

4. A gas meter as claimed in claim 2, further characterized by said one-way valve means (17) being fitted one into each of two paths leading from respective valve grids (31, 32) to a common exhaust tube (35) through which gas leaves the meter.

5. A gas meter as claimed in claim 1, further characterized by said one-way valve means comprising a lightweight ball (24) co-operating with a part-spherical seat (23) such that gas flowing in said one direction lifts the ball off said seat.

6. A gas meter as claimed in claim 5, further characterized by said ball (24) being a hollow plastic ball.

7. A gas meter as claimed in claim 5 or claim 6, further characterized by said one-way valve means being fitted into a common exhaust tube (21).

8. A gas meter as claimed in any of claims 1 to 7, further characterized by the inclusion of a tilt detecting device (20).

FIG.1

FIG.2

FIG.3

FIG.4

2/2

FIG.5

FIG.6

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | CH - A - 491 369 (AQUAMETRO WASSERMESSERFABRIK)<br><br>* Claim 1; fig. 1; column 1, lines 19-27 *<br><br>-- | 1 | G 01 F 3/22<br>G 01 F 15/00 |
| A | FR - A - 1 004 049 (MANN)<br><br>* Fig. 2, part 60; page 3, right column, lines 30-32 *<br><br>---- | | |

**TECHNICAL FIELDS SEARCHED (Int.Cl. 3)**

G 01 F 3/00
G 01 F 15/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims | |
|---|---|---|
| Place of search<br>VIENNA | Date of completion of the search<br>22-06-1982 | Examiner<br>STÖGER |

EPO Form 1503.1 06.78